# EUROPÄISCHE PATENTSCHRIFT

(11) **EP 4 198 663 B1**
(45) Veröffentlichungstag und Bekanntmachung des Hinweises auf die Patenterteilung: **21.08.2024**
(21) Anmeldenummer: 21306808.3
(22) Anmeldetag: 16.12.2021
(51) Int. Cl.: G05B 19/418, G05B 19/042

(54) **VERFAHREN ZUM VERTEILTEN BERECHNEN VON BERECHNUNGSAUFGABEN**
METHOD FOR DISTRIBUTED CALCULATION OF CALCULATION TASKS
PROCÉDÉ DE CALCUL REPARTI DES TACHES DE CALCUL

(43) Veröffentlichungstag der Anmeldung: 21.06.2023
(73) Patentinhaber: Schneider Electric Industries SAS, 92500 Rueil-Malmaison (FR)
(72) Erfinder: Harnischfeger, Michael, 63776 Mömbris (DE)
(74) Vertreter: Manitz Finsterwald Patent- und Rechtsanwaltspartnerschaft mbB

(56) Entgegenhaltungen:
- WO-A1-2015/169352
- DE-T5- 112018 005 879
- US-A1- 2018 299 873

## Beschreibung

Die vorliegende Erfindung betrifft ein Verfahren zum verteilten Berechnen von Berechnungsaufgaben mittels Feldgeräten einer industriellen Anlage.

In heutigen industriellen Anlagen sind üblicherweise eine Vielzahl von Feldgeräten vorhanden, d.h. beispielsweise speicherprogrammierbaren Steuerungen, die Sensoren der industriellen Anlage auswerten und Aktoren ansteuern. Die Feldgeräte können dabei mittels Datenverbindungen untereinander gekoppelt sein, um zusammenzuwirken um die Funktion der industriellen Anlage zu bewirken.

WO 2015/169352 A1 beschreibt eine flexible Nutzung von Controllern in einem Prozesssteuerungssystem. Zur Erzielung einer hohen Fehlertoleranz, weist das System mehr physische Controller auf, als für die eigentliche Steuerfunktion nötig wäre. Ein sogenannter control function manager weist Steuerfunktionen mehreren dieser physischen Controllern zu. Die Controller arbeiten dann als virtuelle Controller und nicht verwendete physische Controller werden als Backup eingesetzt.

DE 11 2018 005879 T5 betrifft verteilte softwaredefinierte industrielle Systeme. Unter anderem werden Steuerfunktionen unterschiedlichen Edge-Steuerungsknoten zugeteilt, wodurch die Last auf die am besten verfügbaren Ressourcen verteilt wird.

US 2018/299873 A1 präsentiert ein Verfahren zum Verteilen der Arbeitslast in einem softwaredefinierten Automatisierungssystem.

Häufig sind die Aufgaben der Feldgeräte zeitlich beschränkt, beispielsweise kann ein Feldgerät eine wiederkehrende Aufgabe durchführen und im Übrigen inaktiv sein. Die Rechenleistung des Feldgeräts liegt in der inaktiven Zeit brach, was die Effizienz reduziert, da häufig auch im inaktiven Zustand signifikant Leistung durch das Feldgerät aufgenommen wird.

Es ist daher die der Erfindung zugrunde liegende Aufgabe, ein Verfahren anzugeben, welches den Betrieb von Feldgeräten in einer industriellen Anlage effizienter gestaltet.

Diese Aufgabe wird durch ein Verfahren gemäß Anspruch 1 gelöst.

Gemäß dem Verfahren werden Berechnungsaufgaben verteilt mittels Feldgeräten einer industriellen Anlage berechnet, wobei
- mehrere Feldgeräte mittels einer Datenverbindung mit einer Aufgabenverteilungseinheit gekoppelt werden,
- die Feldgeräte jeweils in einem Betriebsstatus eine Steuerung der industriellen Anlage bewirken,
- zumindest eines der Feldgeräte, bevorzugt in einem, zumindest teilweisen oder vollständigen, Leerlaufstatus, eine Berechnungsaufgabe von der Aufgabenverteilungseinheit erhält und in einen Berechnungsstatus wechselt, in welchem die Berechnungsaufgabe bearbeitet wird, wobei Rechenleistung, die nicht für die Steuerung der industriellen Anlage benötigt wird, für die Berechnungsaufgabe verwendet wird,
wobei die Aufgabenverteilungseinheit eine Schnittstelle zum Empfang von neuen Berechnungsaufgaben von einer externen Quelle bereitstellt und wobei die Aufgabenverteilungseinheit eine Warteschlange für neue Berechnungsaufgaben führt.

Die Erfindung geht also von dem Zustand aus, dass die Feldgeräte im Betriebsstatus für die herkömmliche Steuerung der industriellen Anlage einsetzt werden. Tritt nun beispielsweise ein Leerlauf eines Feldgeräts ein, kann das Feldgerät von der Aufgabenverteilungseinheit eine Berechnungsaufgabe erhalten und diese lösen, während das Feldgerät üblicherweise im Leerlaufstatus verblieben wäre. Die verfügbare Rechenzeit des Feldgeräts wird somit für die Bearbeitung der Berechnungsaufgabe eingesetzt und bleibt nicht ungenutzt. Hierdurch kann die Effizienz des Einsatzes der für den Betrieb des Feldgeräts ohnehin notwendigen elektrischen Leistung erhöht werden. Die Berechnungsaufgabe kann dabei von extern vorgegeben sein und wird über die Aufgabenverteilungseinheit an die Feldgeräte weitergeleitet. So kann die industrielle Anlage, neben ihrer eigentlichen Aufgabe, zusätzlich zur Bereitstellung von Rechenleistung (ähnlich einem Rechenzentrum) eingesetzt werden.

Die Hauptaufgabe der Feldgeräte ist die Steuerung der industriellen Anlage und nicht die Bearbeitung der Berechnungsaufgaben. Dementsprechend können die Feldgeräte beispielsweise mehr als 50 % oder mehr als 70 % der Zeit in dem Betriebsstatus sein, wohingegen die Zeit in dem Berechnungsstatus lediglich 50 % oder 30 % einnimmt (beispielsweise gesehen über 24 Stunden).

Die Erfindung betrifft somit ein Zurverfügungstellen von Rechenleistung in einem Gerätenetzwerk auf Feldbuslevel.

Über die Datenverbindung, mit welcher die Feldgeräte mit der Aufgabenverteilungseinheit gekoppelt sind, kann die Aufgabenverteilungseinheit die Berechnungsaufgaben an die Feldgeräte übermitteln.

Unter dem Betriebsstatus ist zu verstehen, dass die Feldgeräte beispielsweise Signale von Sensoren der industriellen Anlage empfangen und/oder Aktoren der industriellen Anlage steuern und beispielsweise die zur Steuerung der Aktoren notwendigen Berechnungen durchführen. Kurz gesagt, wird im Betriebsstatus ein herkömmliches Betreiben der industriellen Anlage durch ein jeweiliges Feldgerät vorgenommen. Dabei kann die Rechenkapazität des Feldgeräts überwiegend oder vollständig für den Betrieb der industriellen Anlage eingesetzt werden.

Der Leerlaufstatus kann anzeigen, dass eine Auslastung (beispielsweise eine Auslastung eines Prozessors des jeweiligen Feldgeräts) unter einen vorbestimmten Wert gesunken ist, beispielsweise 20 % oder 10 %. Somit kann im Leerlaufstatus beispielsweise 80 % oder 90 % der Prozessorleistung für die Berechnungsaufgabe zur Verfügung stehen.

Der Leerlaufstatus kann lediglich signalisieren, dass das Feldgerät nun für die Berechnungsaufgabe zur Verfügung steht. Der Leerlaufstatus muss nicht längere Zeit wirklich bestehen, stattdessen kann die Berechnungsaufgabe direkt nach dem Ende des Betriebsstatus bearbeitet werden. Die Berechnungsaufgabe muss nicht zwangsläufig im Leerlaufstatus empfangen werden, sondern kann auch zu einem anderen Zeitpunkt empfangen werden.

Weist das Feldgerät beispielsweise mehrere Prozessorkerne auf, so kann auch nur ein gerade freier Prozessorkern, welcher nicht für die Steuerung der industriellen Anlage benötigt wird, die Berechnungsaufgabe durchführen.

Die Aufgabenverteilungseinheit kann ein separates Gerät sein, beispielsweise ebenfalls ein Feldgerät, aber auch ein üblicher PC (Personal Computer). Die Aufgabenverteilungseinheit kann insbesondere auf einem Feldgerät implementiert sein, welches zugleich der Steuerung der industriellen Anlage dient. Selbiges gilt für die (unten genannte) sekundäre Aufgabenverteilungseinheit.

Wenn im Folgenden davon gesprochen wird, dass zumindest eines der Feldgeräte eine bestimmte Funktion erfüllt und/oder ein bestimmtes Merkmal aufweist, ist damit immer auch gemeint, dass mehrere oder alle der Feldgeräte diese Funktion oder dieses Merkmal aufweisen.

Vorteilhafte Weiterbildungen des erfindungsgemäßen Verfahrens sind in der Beschreibung, den Zeichnungen und den Unteransprüchen angegeben.

Gemäß einer ersten Ausführungsform melden die Feldgeräte einen momentanen Leerlaufstatus an die Aufgabenverteilungseinheit und/oder die Aufgabenverteilungseinheit fragt die Feldgeräte nach einem momentanen Leerlaufstatus ab. Durch das Melden und/oder das Abfragen des Leerlaufstatus kann die Aufgabenverteilungseinheit erkennen, welche Feldgeräte gerade bereit sind, Berechnungsaufgaben zu bearbeiten. Bevorzugt verteilt die Aufgabenverteilungseinheit dynamisch Berechnungsaufgaben an momentan im Leerlauf befindliche Feldgeräte. Dies bedeutet, dass die Aufgabenverteilungseinheit auf die momentane Situation reagiert und beispielsweise die nächste fällige Berechnungsaufgabe an das nächste Feldgerät vergibt, welches in den Leerlaufstatus eintritt. Insbesondere kann das Abfragen des Leerlaufstatus wiederholt erfolgen ("polling"). In industriellen Anlagen kann die Anzahl der leerlaufenden Feldgeräte sich schnell verändern, sodass die Aufgabenverteilungseinheit dynamisch auf die jeweilige Situation reagieren muss, beispielsweise in Abhängigkeit der momentan verfügbaren Anzahl und/oder Rechenkapazität der Feldgeräte für die Berechnungsaufgaben.

Gemäß einer weiteren Ausführungsform verteilt die Aufgabenverteilungseinheit die Berechnungsaufgaben in Abhängigkeit der von den jeweiligen Feldgeräten zur Verfügung gestellten Bandbreite und/oder Rechenkapazität und/oder der voraussichtlichen Dauer des Leerlaufstatus an die Feldgeräte. Neben dem Leerlaufstatus können die Feldgeräte auch ihre Rechenkapazität oder die für Berechnungsaufgaben freie Rechenkapazität an die Aufgabenverteilungseinheit melden. Zusätzlich können beispielsweise die Übertragungsbandbreite und/oder die voraussichtliche Zeitdauer, die das Feldgerät in dem Leerlaufstatus bleiben würde, an die Aufgabenverteilungseinheit gemeldet werden. Die Meldung kann insbesondere jeweils nach einer vorhergegangenen Anfrage der Aufgabenverteilungseinheit erfolgen.

Die Aufgabenverteilungseinheit kann die anstehenden Berechnungsaufgaben insbesondere auch basierend auf der gemeldeten freien Rechenkapazität und/oder Übertragungsbandbreite und/oder voraussichtlicher Dauer des Leerlaufstatus verteilen, sodass die Berechnungsaufgaben dann möglichst passend vergeben werden, beispielsweise wenig rechenintensive Aufgaben an Feldgeräte mit geringer Rechenkapazität und/oder lediglich kurzer Dauer des Leerlaufstatus.

Die Aufgabenverteilungseinheit stellt eine Schnittstelle zum Empfangen von neuen Berechnungsaufgaben bereit. Dabei führt oder umfasst die Aufgabenverteilungseinheit eine Warteschlange für neue Berechnungsaufgaben. Bei der Schnittstelle kann es sich insbesondere um eine API (Application Programming Interface) handeln, über welche mittels einer Datenverbindung oder Software Berechnungsaufgaben an die Aufgabenverteilungseinheit übergeben werden können. Die Schnittstelle dient also insbesondere zum Empfang neuer Berechnungsaufgaben und auch zum Rücksenden erledigter Berechnungsaufgaben, das heißt deren Lösung. Die Aufgabenverteilungseinheit kann insbesondere aus der Warteschlange diejenigen Berechnungsaufgaben auswählen, die gerade passend für ein Feldgerät sind (wie vorstehend schon angedeutet, insbesondere basierend auf der Zeit des Leerlaufstatus, der Rechenkapazität und der Übertragungsbandbreite). Dies bedeutet, die Aufgabenverteilungseinheit muss nicht zwangsläufig die älteste Berechnungsaufgabe an ein Feldgerät verteilen, sondern kann auch eine andere, weniger alte Berechnungsaufgabe, an ein Feldgerät vergeben.

Gemäß einer weiteren Ausführungsform teilt die Aufgabenverteilungseinheit Berechnungsaufgaben, welche insbesondere über die Schnittstelle empfangen wurden, in mehrere Berechnungsaufgaben für verschiedene Feldgeräte auf. Die Aufgabenverteilungseinheit kann bevorzugt große und rechenaufwändige Berechnungsaufgaben unterteilen, um beispielsweise das Lösen der Berechnungsaufgabe während der Zeit zu ermöglichen, während der ein einzelnes Feldgerät nicht im Betriebsstatus ist.

Gemäß einer weiteren Ausführungsform verteilt die Aufgabenverteilungseinheit die Berechnungsaufgaben als Container, insbesondere zur Virtualisierung, als Skript und/oder als Interpretercode an die Feldgeräte. Die Berechnungsaufgaben können also in verschiedener Form von den Feldgeräten erhalten werden bzw. an die Feldgeräte übermittelt werden. Beispielsweise können die Berechnungsaufgaben als Container (z.B. Docker, LXC oder dergleichen) übermittelt werden. Die Container können dann in eine Virtualisierung auf dem Feldgerät aufgenommen und ausgeführt werden. Hierzu kann zumindest eines der Feldgeräte eine virtuelle Maschine (VM) für die Berechnungsaufgaben aufweisen. Alternativ oder zusätzlich können Feldgeräte mit einer Skript-Engine in einer entsprechenden Skript-Sprache verfasste Skripte zur Verfügung gestellt bekommen. Die Feldgeräte können dann diese Skripte ausführen und auf diese Weise die Berechnungsaufgabe bearbeiten und/oder lösen. Weiter alternativ oder zusätzlich können Feldgeräte einen Interpreter, beispielsweise einen "on the fly Interpreter", umfassen, um von der Aufgabenverteilungseinheit erhaltenen Interpretercode auszuführen. Bei den letztgenannten Feldgeräten kann es sich beispielsweise um Java-fähige Geräte handeln.

Gemäß einer weiteren Ausführungsform werden die in dem Berechnungsstatus durchgeführten Berechnungsaufgaben mit einer niedrigeren Priorität auf dem Feldgerät ausgeführt, als die Steuerung der industriellen Anlage in dem Betriebsstatus. Dies bedeutet, die Steuerung der industriellen Anlage im Betriebsstatus besitzt jeweils Priorität, sodass die Steuerung der industriellen Anlage nicht nachteilig durch die Ausführung der Berechnungsaufgaben beeinflusst wird. Insbesondere kann die Steuerung der industriellen Anlage vollständig unabhängig von der Ausführung der Berechnungsaufgaben in den Feldgeräten erfolgen.

Gemäß einer weiteren Ausführungsform ist zumindest eines der Feldgeräte zumindest in dem Betriebsstatus echtzeitfähig. Insbesondere kann das Feldgerät ein echtzeitfähiges Betriebssystem ausführen, um in dem Betriebsstatus die industrielle Anlage zu steuern.

Alternativ oder zusätzlich ist zumindest eines der Feldgeräte mittels eines echtzeitfähigen Feldbusses mit der Aufgabenverteilungseinheit gekoppelt. Die Feldgeräte der industriellen Anlage können zumindest zum Teil oder auch alle mittels desselben oder eines anderen echtzeitfähigen Feldbusses untereinander gekoppelt sein. Die vorgenannte Datenverbindung kann dementsprechend als, insbesondere echtzeitfähiger, Feldbus ausgebildet sein, beispielsweise als Sercos III, EIP, Ether-CAT, und dergleichen.

Bei den Feldgeräten kann es sich beispielsweise um speicherprogrammierbare Steuerungen (SPS) handeln, die insbesondere keine eigenen Mensch-Maschine-Schnittstellen (z.B. Tastatur oder Maus) aufweisen und auch beispielsweise keine eigenen Bildschirme umfassen. Bei den Feldgeräten handelt es sich dementsprechend nicht um PCs oder Server. Insbesondere können die Feldgeräte auch in ihrer Speicherausstattung und ihrer Rechengeschwindigkeit begrenzt sein. Beispielsweise können die Feldgeräte einen maximalen Hauptspeicher (RAM) von 128 oder 256 MB und eine maximale Taktfrequenz von 1 GHz aufweisen.

Gemäß einer weiteren Ausführungsform ist die Berechnungsaufgabe eine Teilaufgabe einer größeren Aufgabe, die an die Aufgabenverteilungseinheit gesandt wurde. Wie oben bereits angedeutet, kann die Aufgabenverteilungseinheit größere Aufgaben in mehrere Berechnungsaufgaben aufteilen. Die Berechnungsaufgabe ist dabei insbesondere Teil einer Simulation, einer Vorhersageberechnung (z.B. für die Wettervorhersage), einer Anwendung einer künstlichen Intelligenz, einer lokalen Analyse oder einer Selbstoptimierung. Durch die lokale Analyse und/oder die Selbstoptimierung können die Berechnungsaufgaben genutzt werden, um beispielsweise den Betrieb der industriellen Anlage und/oder der Feldgeräte selbst noch effizienter zu gestalten.

Gemäß einer weiteren Ausführungsform wechselt zumindest eines der Feldgeräte bei Eintreten eines Ereignisses oder eines Interrupts von dem Berechnungsstatus in den Betriebsstatus. Wenn also ein Event und/oder ein Interrupt eintritt, welches/welcher dem Feldgerät signalisiert, dass es für die Steuerung des industriellen Prozesses benötigt wird, kann das Feldgerät dadurch direkt in die Steuerung des industriellen Prozesses eintreten. Somit wird ein Zeitversatz beim Übertritt in den Betriebsstatus minimal gehalten. Bei dem Event oder dem Interrupt kann es sich beispielsweise um das Eintreffen eines externen Sensorsignals bei dem Feldgerät oder um den Ablauf eines entsprechenden Timers innerhalb des Feldgeräts handeln.

Gemäß einer weiteren Ausführungsform erstellt zumindest eines der Feldgeräte und/oder die Aufgabenverteilungseinheit eine Vorhersage, wann und/oder wie lange sich das Feldgerät oder ein vorbestimmtes Feldgerät in dem Berechnungsstatus befinden kann, woraufhin die Aufgabenverteilungseinheit auf Basis der Vorhersage eine Planung für zukünftige zu verteilende Berechnungsaufgaben erstellt. Die Vorhersage kann dazu verwendet werden, zukünftig vorhandene Ressourcen einzuplanen. Die Vorhersage kann beispielsweise aufgrund wiederkehrender vergangener Abläufe getroffen werden. Beispielsweise kann das Feldgerät und/oder die Aufgabenverteilungseinheit erkennen, dass ein Feldgerät alle fünf Minuten für eine Minute in den Leerlaufstatus übergeht. Die Aufgabenverteilungseinheit kann eine solche Information dann für die Planung zukünftiger Berechnungsaufgaben heranziehen. Es ist auch möglich, die Vorhersage aufgrund eines Programmablaufs des Feldgeräts zu ermitteln. Beispielsweise kann sich aus dem programmierten Programmablauf des Feldgeräts ergeben, dass das Feldgerät zu vorhersehbaren Zeiten in den Leerlaufstatus eintritt.

Gemäß einer weiteren Ausführungsform werden zumindest 100, bevorzugt zumindest 500 oder 1000, Feldgeräte mit der Aufgabenverteilungseinheit gekoppelt. Die industrielle Anlage kann dementsprechend zumindest 100, 500 oder 1000 Feldgeräte umfassen. Die Feldgeräte können in der industriellen Anlage zusammenwirken, um die Funktion der industriellen Anlage zu gewährleisten. Die Feldgeräte können verschiedenartig aufgebaut sein und sich beispielsweise in ihrer Leistungsfähigkeit, ihrer Geschwindigkeit, ihrem Speicherplatz und dergleichen unterscheiden. Wie vorstehend bereits ausgeführt, kann die Aufgabenverteilungseinheit die jeweils passenden Berechnungsaufgaben im passenden Format an die verschiedenen Feldgeräte zuweisen.

Gemäß einer weiteren Ausführungsform wirken mehrere der Feldgeräte in einer Maschine der industriellen Anlage zusammen, wobei die Maschine eine sekundäre Aufgabenverteilungseinheit umfasst, welche von der Aufgabenverteilungseinheit empfangene Berechnungsaufgaben auf die Feldgeräte der Maschine verteilt. Die Aufgabenverteilungseinheit kann somit zweistufig ausgebildet sein. Die vorgennannte (primäre) Aufgabenverteilungseinheit und die hier beschriebene sekundäre Aufgabenverteilungseinheit können zusammenwirken, um die Berechnungsaufgaben auf die Feldgeräte zu verteilen.

In der industriellen Anlage können mehrere verschiedene Maschinen (beispielsweise ein Roboter oder eine Bearbeitungsmaschine) vorhanden sein. Die sekundäre Aufgabenverteilungseinheit in der jeweiligen Maschine kann von der (primären) Aufgabenverteilungseinheit Berechnungsaufgaben erhalten, wobei die sekundäre Aufgabenverteilungseinheit eine Unterverteilung an die Feldgeräte der jeweiligen Maschine vornimmt. Die sekundäre Aufgabenverteilungseinheit kann dabei entsprechend der (primären) Aufgabenverteilungseinheit ausgebildet sein und entsprechend arbeiten.

Weiterer Gegenstand der Erfindung ist eine industrielle Anlage, insbesondere eine Fabrikationsstraße oder eine Sortieranlage, mit mehreren Feldgeräten und einer Aufgabenverteilungseinheit. Die Feldgeräte sind mittels einer Datenverbindung mit der Aufgabenverteilungseinheit gekoppelt. Die Aufgabenverteilungseinheit stellt eine Schnittstelle zum Empfang von neuen Berechnungsaufgaben von einer externen Quelle bereit und führt eine Warteschlange für neue Berechnungsaufgaben. Die Feldgeräte sind ausgebildet, jeweils in einem Betriebsstatus eine Steuerung der industriellen Anlage zu bewirken. Zumindest eines der Feldgeräte ist ausgebildet, in einem, zumindest teilweisen oder vollständigen, Leerlaufstatus eine Berechnungsaufgabe von der Aufgabenverteilungseinheit zu erhalten und in einen Berechnungsstatus zu wechseln, in welchem die Berechnungsaufgabe bearbeitet wird, wobei Rechenleistung, die nicht für die Steuerung der industriellen Anlage benötigt wird, für die Berechnungsaufgabe verwendet wird.

Bei der industriellen Anlage kann es sich beispielsweise auch um eine Photovoltaikanlage handeln, welche eine Vielzahl von motorisch der Sonne nachführbaren Solarpaneelen aufweist, wobei die Solarpaneele jeweils ein eigenes Feldgerät umfassen, welches für die Nachführung zur Sonne sorgt. Eine solche Photovoltaikanlage kann beispielsweise 5000 Feldgeräte umfassen, die insbesondere nachts aber auch zwischen Nachführoperationen jeweils in den Leerlaufstatus übergehen würden. Die so brach liegende Rechenleistung der Feldgeräte kann durch die Bearbeitung der Berechnungsaufgaben sinnvoll eingesetzt werden.

Im Übrigen gelten für die industrielle Anlage die Ausführungen zum erfindungsgemäßen Verfahren entsprechend, dies gilt insbesondere hinsichtlich Vorteilen und Ausführungsformen.

Die hierin genannten Ausführungsformen können alle untereinander kombiniert werden, sofern sich nicht explizit etwas anderes ergibt.

Nachfolgend wird die Erfindung rein beispielhaft unter Bezugnahme auf die Zeichnungen beschrieben. Es zeigen:
- Fig. 1: schematisch eine industrielle Anlage mit mehreren Feldgeräten und einer Aufgabenverteilungseinheit;
- Fig. 2: schematisch eine industrielle Anlage mit mehreren Maschinen und einer primären und sekundären Aufgabenverteilungseinheit; und
- Fig. 3: ein Zustandsdiagramm eines Feldgeräts mit den verschiedenen Status, welche das Feldgerät einnehmen kann.

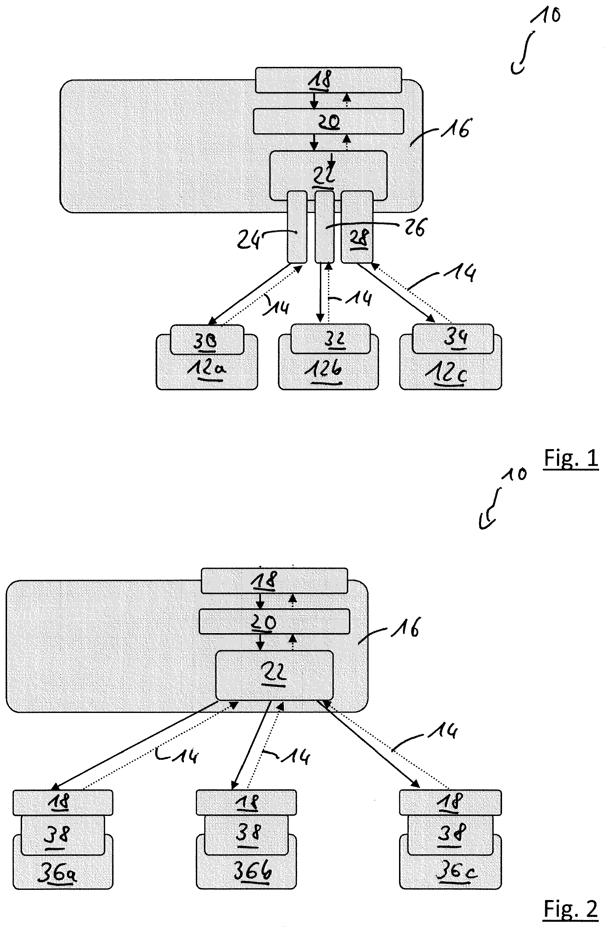

Fig. 1 zeigt schematisch eine industrielle Anlage 10, beispielsweise eine Herstellungsstraße für ein (nicht dargestelltes) Produkt, welche mehrere Feldgeräte 12a, 12b, 12c umfasst. Die Feldgeräte sind mittels einer Feldbusverbindung 14 jeweils mit einer Aufgabenverteilungseinheit 16 gekoppelt.

Die Aufgabenverteilungseinheit 16 umfasst eine Schnittstelle in Form einer API 18. Über die API 18 empfängt die Aufgabenverteilungseinheit 16 Berechnungsaufgaben von einer externen Quelle (nicht gezeigt). Die Berechnungsaufgaben werden in der Aufgabenverteilungseinheit 16 mittels einer Übersetzungsschicht 20 in eine für die Feldgeräte 12 passende Form überführt. Ein Bereitstellungsmodul 22 empfängt die Berechnungsaufgaben von der Übersetzungsschicht 20 und "verpackt"/überführt die Berechnungsaufgaben in eine Form, die von dem jeweiligen Feldgerät 12 verarbeitet werden kann. In der Fig. 1 sind beispielhaft ein Container 24 (für die Virtualisierung), ein Skript 26 und ein Interpretercode 28 gezeigt. Der Container 24 wird an das Feldgerät 12a übermittelt, welches ein Containerenvironment 30 zur Ausführung des Containers 24 aufweist. Das Skript 26 wird an das Feldgerät 12b übermittelt, welches eine Skript-Engine 32 besitzt. Schließlich wird der Interpretercode 28 an einen Interpreter 34 des Feldgeräts 12c übermittelt.

Nach der Bearbeitung der Berechnungsaufgaben übersenden die Feldgeräte 12 die bearbeiteten Berechnungsaufgaben über die Feldbusverbindungen 14 an die Aufgabenverteilungseinheit 16, welche über die API 18 ein Ergebnis der jeweiligen Berechnungsaufgabe ausgibt.

Fig. 2 zeigt ebenfalls eine industrielle Anlage 10, welche im Unterschied zu Fig. 1 mehrere Maschinen 36a, 36b, 36c umfasst. In jeder Maschine 36 sind mehrere Feldgeräte 12 vorhanden (in Fig. 2 nicht dargestellt). Jede der Maschinen 36 weist eine sekundäre Aufgabenverteilungseinheit 38 auf, die über eine API 18 Berechnungsaufgaben von dem Bereitstellungsmodul 22 der (primären) Aufgabenverteilungseinheit 16 erhält. Die Funktion innerhalb einer Maschine 36 entspricht der Funktionsweise, die mit Bezug auf Fig. 1 bereits beschrieben wurde.

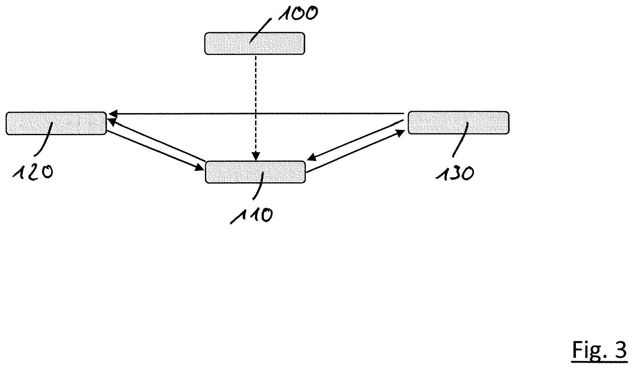

Fig. 3 zeigt ein Zustandsmodell eines Feldgeräts 12. Nach einem Start 100 befindet sich das Feldgerät 12 zunächst im Leerlaufstatus 110. Zur Steuerung der industriellen Anlage 10 wird das Feldgerät 12 in einen Betriebsstatus 120 versetzt. Ist das Feldgerät 12 momentan nicht oder nicht vollständig oder nicht überwiegend für die Steuerung der industriellen Anlage notwendig, so kehrt es in den Leerlaufstatus 110 zurück. Dass sich das Feldgerät 12 in dem Leerlaufstatus 110 befindet, wird an die Aufgabenverteilungseinheit 16 gemeldet, die dem Feldgerät 12 daraufhin eine Berechnungsaufgabe zuteilt. Das Feldgerät 12 wechselt daraufhin in einen Berechnungsstatus 130, in welchem die Berechnungsaufgabe bearbeitet wird. Nach der Bearbeitung der Berechnungsaufgabe kehrt das Feldgerät 12 in den Leerlaufstatus 110 zurück und kann dann beispielsweise mit einer weiteren Berechnungsaufgabe versorgt werden.

Der Betriebsstatus 120 besitzt eine höhere Priorität als der Berechnungsstatus 130. Stellt das Feldgerät 12 nun ein Event oder ein Interrupt fest, die darauf hindeuten, dass das Feldgerät für die Steuerung der industriellen Anlage benötigt wird, wird die Bearbeitung der Berechnungsaufgabe sofort pausiert und das Feldgerät tritt vom Berechnungsstatus 130 direkt in den Betriebsstatus 120 über, um die Steuerung der industriellen Anlage zu bewirken.

Ist die Steuerung der industriellen Anlage wieder abgeschlossen, kann über den Leerlaufstatus 110 in den Berechnungsstatus 130 zurückgekehrt werden.

Durch die Vorsehung des Berechnungsstatus 130 kann üblicherweise nicht verwendete Rechenzeit sinnvoll genutzt werden, um die Effizienz der industriellen Anlage hinsichtlich des Stromverbrauchs zu erhöhen. Durch die Aufgabenverteilungseinheit 16 kann dabei dynamisch auf die Auslastung der Feldgeräte 12 reagiert werden.

### Bezugszeichenliste

- 10: industrielle Anlage
- 12: Feldgerät
- 14: Feldbusverbindung
- 16: Aufgabenverteilungseinheit
- 18: API
- 20: Übersetzungsschicht
- 22: Bereitstellungsmodul
- 24: Container
- 26: Skript
- 28: Interpretercode
- 30: Containerenvironment
- 32: Skript-Engine
- 34: Interpreter
- 36: Maschine
- 38: Sekundäre Aufgabenverteilungseinheit
- 100: Start
- 110: Leerlaufstatus
- 120: Betriebsstatus
- 130: Berechnungsstatus

## Patentansprüche

1. Verfahren zum verteilten Berechnen von Berechnungsaufgaben mittels Feldgeräten (12a, 12b, 12c) einer industriellen Anlage (10), wobei
- mehrere Feldgeräte (12a, 12b, 12c) mittels einer Datenverbindung (14) mit einer Aufgabenverteilungseinheit (16) gekoppelt werden,
- die Feldgeräte (12a, 12b, 12c) jeweils in einem Betriebsstatus (120) eine Steuerung der industriellen Anlage (10) bewirken,
**dadurch gekennzeichnet, dass**
- zumindest eines der Feldgeräte (12a, 12b, 12c), in einem Leerlaufstatus (110), eine Berechnungsaufgabe von der Aufgabenverteilungseinheit (16) erhält und in einen Berechnungsstatus (130) wechselt, in welchem die Berechnungsaufgabe bearbeitet wird, wobei Rechenleistung, die nicht für die Steuerung der industriellen Anlage benötigt wird, für die Berechnungsaufgabe verwendet wird,
wobei die Aufgabenverteilungseinheit (16) eine Schnittstelle (18) zum Empfang von neuen Berechnungsaufgaben von einer externen Quelle bereitstellt und wobei die Aufgabenverteilungseinheit (16) eine Warteschlange für neue Berechnungsaufgaben führt.

2. Verfahren nach Anspruch 1,
wobei die Feldgeräte (12a, 12b, 12c) einen momentanen Leerlaufstatus (110) an die Aufgabenverteilungseinheit (16) melden und/oder die Aufgabenverteilungseinheit (16) die Feldgeräte (12a, 12b, 12c) nach einem momentanen Leerlaufstatus (110) abfragt, und die Aufgabenverteilungseinheit (16) dynamisch Berechnungsaufgaben an momentan im Leerlaufstatus (110) befindliche Feldgeräte (12a, 12b, 12c) verteilt.

3. Verfahren nach Anspruch 2,
wobei die Aufgabenverteilungseinheit (16) die Berechnungsaufgaben in Abhängigkeit der von den jeweiligen Feldgeräten (12a, 12b, 12c) zur Verfügung gestellten Übertragungsbandbreite und/oder Rechenkapazität und/oder der voraussichtlichen Dauer des Leerlaufstatus (110) an die Feldgeräte (12a, 12b, 12c) verteilt.

4. Verfahren nach Anspruch 1,
wobei die Aufgabenverteilungseinheit (16) über die Schnittstelle empfangene Berechnungsaufgaben in mehrere Berechnungsaufgaben für verschiedene Feldgeräte (12a, 12b, 12c) aufteilt
und/oder Berechnungsaufgaben als Container zur Virtualisierung als Skript oder als Interpretercode an die Feldgeräte (12a, 12b, 12c) verteilt.

5. Verfahren nach zumindest einem der vorstehenden Ansprüche,
wobei die in dem Berechnungsstatus (130) durchgeführten Berechnungsaufgaben mit einer niedrigeren Priorität auf dem jeweiligen Feldgerät (12a, 12b, 12c) ausgeführt werden, als die Steuerung der industriellen Anlage (10) in dem Betriebsstatus (120).

6. Verfahren nach zumindest einem der vorstehenden Ansprüche,
wobei zumindest eines der Feldgeräte (12a, 12b, 12c) zumindest in dem Betriebsstatus (120) echtzeitfähig ist und/oder zumindest eines der Feldgeräte (12a, 12b, 12c) mittels eines echtzeitfähigen Feldbusses mit der Aufgabenverteilungseinheit (16) gekoppelt ist.

7. Verfahren nach zumindest einem der vorstehenden Ansprüche,
wobei die Berechnungsaufgabe eine Teilaufgabe einer größeren Aufgabe ist, die an die Aufgabenverteilungseinheit (16) gesandt wurde, und/oder wobei die Berechnungsaufgabe Teil einer Simulation, eine Vorhersageberechnung, einer Anwendung einer künstlichen Intelligenz, einer lokalen Analyse oder einer Selbstoptimierung ist.

8. Verfahren nach zumindest einem der vorstehenden Ansprüche,
wobei zumindest eines der Feldgeräte (12a, 12b, 12c) bei Eintreten eines Ereignisses oder eines Interrupts von dem Berechnungsstatus (130) in den Betriebsstatus (120) wechselt.

9. Verfahren nach zumindest einem der vorstehenden Ansprüche,
wobei zumindest eines der Feldgeräte (12a, 12b, 12c) und/oder die Aufgabenverteilungseinheit (16) eine aufgrund wiederkehrender vergangener Abläufe getroffene Vorhersage erstellt, wann und/oder wie lange sich das zumindest eine Feldgerät (12a, 12b, 12c) in dem Berechnungsstatus (130) befinden kann, woraufhin die Aufgabenverteilungseinheit (16) auf Basis der Vorhersage eine Planung für zukünftig zu verteilende Berechnungsaufgaben erstellt.

10. Verfahren nach zumindest einem der vorstehenden Ansprüche,
wobei zumindest 100, bevorzugt zumindest 500 oder 1000, Feldgeräte (12a, 12b, 12c) mit der Aufgabenverteilungseinheit (16) gekoppelt werden.

11. Verfahren nach zumindest einem der vorstehenden Ansprüche,
wobei mehrere der Feldgeräte (12a, 12b, 12c) in einer Maschine der industriellen Anlage (10) zusammenwirken, wobei die Maschine eine sekundäre Aufgabenverteilungseinheit (38) umfasst, welche von der Aufgabenverteilungseinheit (16) empfangene Berechnungsaufgaben auf die Feldgeräte (12a, 12b, 12c) der Maschine verteilt.

12. Industrielle Anlage mit mehreren Feldgeräten (12a, 12b, 12c) und einer Aufgabenverteilungseinheit (16), wobei die Feldgeräte (12a, 12b, 12c) mittels einer Datenverbindung (14) mit der Aufgabenverteilungseinheit (16) gekoppelt sind, wobei die Aufgabenverteilungseinheit (16) eine Schnittstelle (18) zum Empfang von neuen Berechnungsaufgaben von einer externen Quelle bereitstellt und wobei die Aufgabenverteilungseinheit (16) eine Warteschlange für neue Berechnungsaufgaben führt, wobei
- die Feldgeräte (12a, 12b, 12c) ausgebildet sind, jeweils in einem Betriebsstatus (120) eine Steuerung der industriellen Anlage (10) zu bewirken,
- zumindest eines der Feldgeräte (12a, 12b, 12c) ausgebildet ist, in einem Leerlaufstatus (110) eine Berechnungsaufgabe von der Aufgabenverteilungseinheit (16) zu erhalten und in einen Berechnungsstatus (130) zu wechseln, in welchem die Berechnungsaufgabe bearbeitet wird, wobei Rechenleistung, die nicht für die Steuerung der industriellen Anlage benötigt wird, für die Berechnungsaufgabe verwendet wird.

13. Industrielle Anlage nach dem vorstehenden Anspruch, die als Fabrikationsstraße, Sortieranlage oder Photovoltaikanlage ausgeführt ist.

## Claims

1. A method for the distributed calculation of calculation tasks by means of field devices (12a, 12b, 12c) of an industrial plant (10), wherein
- a plurality of field devices (12a, 12b, 12c) are coupled to a task distribution unit (16) by means of a data link (14),
- the field devices (12a, 12b, 12c) effect a control of the industrial plant (10) in an operating state (120) in each case,
**characterized in that**
- at least one of the field devices (12a, 12b, 12c), in an idle state (110), receives a calculation task from the task distribution unit (16) and changes to a calculation state (130) in which the calculation task is processed, wherein processing power that is not required for the control of the industrial plant is used for the calculation task,
wherein the task distribution unit (16) provides an interface (18) for receiving new calculation tasks from an external source and wherein the task distribution unit (16) maintains a queue for new calculation tasks.

2. A method according to claim 1,
wherein the field devices (12a, 12b, 12c) report a current idle state (110) to the task distribution unit (16) and/or the task distribution unit (16) polls the field devices (12a, 12b, 12c) for a current idle state (110), and the task distribution unit (16) dynamically distributes calculation tasks to field devices (12a, 12b, 12c) currently in the idle state (110).

3. A method according to claim 2,
wherein the task distribution unit (16) distributes the calculation tasks to the field devices (12a, 12b, 12c) in dependence on the transmission bandwidth and/or processing capacity provided by the respective field devices (12a, 12b, 12c) and/or on the provisional duration of the idle state (110).

4. A method according to claim 1,
wherein the task distribution unit (16) splits calculation tasks received via the interface into a plurality of calculation tasks for different field devices (12a, 12b, 12c)
and/or distributes calculation tasks as a container for virtualization as a script or as an interpreter code to the field devices (12a, 12b, 12c).

5. A method according to at least one of the preceding claims,
wherein the calculation tasks carried out in the calculation state (130) are performed with a lower priority on the respective field device (12a, 12b, 12c) than the control of the industrial plant (10) in the operating state (120).

6. A method according to at least one of the preceding claims,
wherein at least one of the field devices (12a, 12b, 12c) is real-time capable at least in the operating state (120) and/or at least one of the field devices (12a, 12b, 12c) is coupled to the task distribution unit (16) by means of a real-time capable field bus.

7. A method according to at least one of the preceding claims,
wherein the calculation task is a subtask of a larger task that was sent to the task distribution unit (16), and/or wherein the calculation task is part of a simulation, a prediction calculation, an application of artificial intelligence, a local analysis or a self-optimization.

8. A method according to at least one of the preceding claims,
wherein at least one of the field devices (12a, 12b, 12c) changes from the calculation state (130) to the operating state (120) when an event or an interrupt occurs.

9. A method according to at least one of the preceding claims,
wherein at least one of the field devices (12a, 12b, 12c) and/or the task distribution unit (16) makes/make a prediction based on recurring past sequences as to when and/or how long the at least one field device (12a, 12b, 12c) can be in the calculation state (130), whereupon the task distribution unit (16) prepares a planning for calculation tasks to be distributed in the future based on the prediction.

10. A method according to at least one of the preceding claims,
wherein at least 100 field devices (12a, 12b, 12c), preferably at least 500 or 1000 field devices (12a, 12b, 12c), are coupled to the task distribution unit (16).

11. A method according to at least one of the preceding claims,
wherein a plurality of the field devices (12a, 12b, 12c) cooperate in a machine of the industrial plant (10), wherein the machine comprises a secondary task distribution unit (16) which distributes calculation tasks received from the task distribution unit (16) to the field devices (12a, 12b, 12c) of the machine.

12. An industrial plant comprising a plurality of field devices (12a, 12b, 12c) and a task distribution unit (16), wherein the field devices (12a, 12b, 12c) are coupled to the task distribution unit (16) by means of a data link (14), wherein the task distribution unit (16) provides an interface (18) for receiving new calculation tasks from an external source and wherein the task distribution unit (16) maintains a queue for new calculation tasks, wherein
- the field devices (12a, 12b, 12c) are configured to effect a control of the industrial plant (10) in an operating state (120) in each case,
- at least one of the field devices (12a, 12b, 12c) is configured to receive a calculation task from the task distribution unit (16) in an idle state (110) and to change to a calculation state (130) in which the calculation task is processed, wherein processing power that is not required for the control of the industrial plant is used for the calculation task.

13. An industrial plant according to the preceding claim which is designed as a production line, a sorting plant or a photovoltaic system.

## Revendications

1. Procédé de calcul réparti de tâches de calcul au moyen d'appareils de terrain (12a, 12b, 12c) d'une installation industrielle (10), dans lequel
- plusieurs appareils de terrain (12a, 12b, 12c) sont couplés à une unité de répartition des tâches (16) au moyen d'une connexion de données (14),
- dans un état de fonctionnement (120), les appareils de terrain (12a, 12b, 12c) provoquent chacun une commande de l'installation industrielle (10), **caractérisé en ce que**
- dans un état de marche à vide (110), l'un au moins des appareils de terrain (12a, 12b, 12c), reçoit une tâche de calcul de l'unité de répartition des tâches (16) et passe dans un état de calcul (130) dans lequel la tâche de calcul est traitée, sachant que la puissance de calcul qui n'est pas nécessaire pour la commande de l'installation industrielle est utilisée pour la tâche de calcul,
l'unité de répartition des tâches (16) met à disposition une interface (19) pour recevoir de nouvelles tâches de calcul provenant d'une source externe, et l'unité de répartition des tâches (16) gère une file d'attente pour de nouvelles tâches de calcul.

2. Procédé selon la revendication 1,
dans lequel les appareils de terrain (12a, 12b, 12c) signalent un état de marche à vide momentané (110) à l'unité de répartition des tâches (16), et/ou l'unité de répartition des tâches (16) interroge les appareils de terrain (12a, 12b, 12c) sur un état de marche à vide momentané (110), et l'unité de répartition des tâches (16) répartit dynamiquement des tâches de calcul à des appareils de terrain (12a, 12b, 12c) se trouvant momentanément dans l'état de marche à vide (110).

3. Procédé selon la revendication 2,
dans lequel l'unité de répartition des tâches (16) répartit les tâches de calcul aux appareils de terrain (12a, 12b, 12c) en fonction de la largeur de bande de transmission et/ou de la capacité de calcul, mises à disposition par les appareils de terrain respectifs (12a, 12b, 12c), et/ou en fonction de la durée prévisionnelle de l'état de marche à vide (110).

4. Procédé selon la revendication 1,
dans lequel l'unité de répartition des tâches (16) divise les tâches de calcul, reçues par l'intermédiaire de l'interface, en plusieurs tâches de calcul pour différents appareils de terrain (12a, 12b, 12c), et/ou répartit les tâches de calcul aux appareils de terrain (12a, 12b, 12c) sous forme de conteneur pour la virtualisation, sous forme de script ou sous forme de code d'interprétation.

5. Procédé selon l'une au moins des revendications précédentes,
dans lequel les tâches de calcul effectuées dans l'état de calcul (130) sont exécutées avec une priorité plus faible sur l'appareil de terrain (12a, 12b, 12c) respectif que la commande de l'installation industrielle (10) dans l'état de fonctionnement (120).

6. Procédé selon l'une au moins des revendications précédentes,
dans lequel l'un au moins des appareils de terrain (12a, 12b, 12c) est apte à fonctionner en temps réel au moins dans l'état de fonctionnement (120), et/ou l'un au moins des appareils de terrain (12a, 12b, 12c) est couplé à l'unité de répartition des tâches (16) au moyen d'un bus de terrain apte à fonctionner en temps réel.

7. Procédé selon l'une au moins des revendications précédentes,
dans lequel la tâche de calcul est une sous-tâche d'une tâche plus importante qui a été envoyée à l'unité de répartition des tâches (16), et/ou
la tâche de calcul fait partie d'une simulation, d'un calcul prédictif, d'une application d'intelligence artificielle, d'une analyse locale ou d'une auto-optimisation.

8. Procédé selon l'une au moins des revendications précédentes,
dans lequel l'un au moins des appareils de terrain (12a, 12b, 12c) passe de l'état de calcul (130) à l'état de fonctionnement (120) lorsqu'un événement ou une interruption se produit.

9. Procédé selon l'une au moins des revendications précédentes,
dans lequel l'un au moins des appareils de terrain (12a, 12b, 12c) et/ou l'unité de répartition des tâches (16) établit une prévision du moment et/ou de la durée pendant laquelle ledit au moins un appareil de terrain (12a, 12b, 12c) peut se trouver dans l'état de calcul (130), ladite prévision étant faite en fonction des déroulements précédents récurrents, à la suite de quoi l'unité de répartition des tâches (16) établit, sur la base de la prévision, une planification des tâches de calcul à répartir à l'avenir.

10. Procédé selon l'une au moins des revendications précédentes,
dans lequel au moins 100, de préférence au moins 500 ou 1000, appareils de terrain (12a, 12b, 12c) sont couplés à l'unité de répartition des tâches (16).

11. Procédé selon l'une au moins des revendications précédentes,
dans lequel plusieurs desdits appareils de terrain (12a, 12b, 12c) coopèrent dans une machine de l'installation industrielle (10), ladite machine comprenant une unité secondaire de répartition des tâches (38) qui répartit des tâches de calcul, reçues de l'unité de répartition des tâches (16), auxdits appareils de terrain (12a, 12b, 12c) de ladite machine.

12. Installation industrielle comprenant plusieurs appareils de terrain (12a, 12b, 12c) et une unité de répartition des tâches (16), les appareils de terrain (12a, 12b, 12c) étant couplés à l'unité de répartition des tâches (16) au moyen d'une connexion de données (14), l'unité de répartition des tâches (16) mettant à disposition une interface (19) pour recevoir de nouvelles tâches de calcul provenant d'une source externe, et l'unité de répartition des tâches (16) gérant une file d'attente pour de nouvelles tâches de calcul, dans laquelle
- dans un état de fonctionnement (120), les appareils de terrain (12a, 12b, 12c) sont conçus pour provoquer chacun une commande de l'installation industrielle (10),
- dans un état de marche à vide (110), l'un au moins des appareils de terrain (12a, 12b, 12c) est conçu pour recevoir une tâche de calcul de l'unité de répartition des tâches (16) et pour passer dans un état de calcul (130) dans lequel la tâche de calcul est traitée, sachant que la puissance de calcul qui n'est pas nécessaire pour la commande de l'installation industrielle est utilisée pour la tâche de calcul.

13. Installation industrielle selon la revendication précédente, réalisée sous forme de ligne de fabrication, d'installation de tri ou d'installation photovoltaïque.
